# EUROPÄISCHE PATENTSCHRIFT

(11) **EP 1 514 774 B1**
(45) Veröffentlichungstag und Bekanntmachung des Hinweises auf die Patenterteilung: **25.10.2006**
(21) Anmeldenummer: 04016701.7
(22) Anmeldetag: 15.07.2004
(51) Int. Cl.: B62D 53/08

(54) **Sattelkupplung**
Saddle coupling
Sellette d'attelage

(30) Priorität: 09.09.2003 DE 10341880
(43) Veröffentlichungstag der Anmeldung: 16.03.2005
(73) Patentinhaber: Baier & Köppel GmbH & Co., D-91257 Pegnitz (DE)
(72) Erfinder: Brendel, Jürgen, 91278 Pottenstein (DE)
(74) Vertreter: Zech, Stefan Markus

(56) Entgegenhaltungen:
- EP-A- 0 507 342
- DE-A- 10 118 284
- DE-U- 20 206 050
- DE-U- 29 603 641
- US-A- 2 468 013

## Beschreibung

Die Erfindung betrifft eine Sattelkupplung zur Montage an einem Zugfahrzeug, um einen Anhänger am Zugfahrzeug anzukuppeln, wobei die Sattelkupplung ein fahrzeugseitiges Grundteil und eine gegenüber dem Grundteil verschwenkbare Auflageplatte aufweist.

Eine Sattelkupplung ist dem Fachmann hinlänglich bekannt und in einer speziellen, keineswegs zwingenden Ausgestaltung beispielsweise in der DE 296 03 641 U1 oder US 2 468 013 beschrieben.

Derartige Sattelkupplungen werden bislang entweder von einer externen Schmiereinrichtung mit Schmierstoff versorgt oder - unter Vermeidung einer Schmierstoffpumpe - durch eine mit Druck zu beaufschlagende bzw. beaufschlagte Schmierstoffbuchse, die direkt an der Sattelkupplung angebracht sein kann. Eine Sattelkupplung mit einem Fahrzeugseitigen Grundteil, einer gegenüber dem Grundteil verschwenkbaren Auflageplatte und einer Schmiereinrichtung ist bereits aus der EP 0507342 A1 bekannt, wobei die dort vorgeschlagene herkömmliche Schmiereinrichtung aus einem im Aufbau der Sattelkupplung vorgesehenen Schmiermittelkanal sowie einem Anschlussstück, an die eine Schmiermittelpresse bedarfsweise angeschlossen werden kann, besteht.

Die Aufgabe der vorliegenden Erfindung besteht gegenüber dem geschilderten Stand der Technik darin, eine Sattelkupplung mit einem alternativen Schmierkonzept zu schaffen. Eine weitere Aufgabe besteht darin, eine entsprechende Schmiereinrichtung sowie ein Verfahren zur Schmierung einer Sattelkupplung vorzuschlagen.

Diese Aufgaben werden in vorrichtungstechnischer Hinsicht durch die Merkmale der Patentansprüche 1 bzw. 7 und in verfahrenstechnischer Hinsicht durch die Merkmale des Patentanspruchs 8 gelöst.

Eine Kernüberlegung der vorliegenden Erfindung besteht darin, dass zunächst eine an der Sattelkupplung angeordnete Schmiereinrichtung geschaffen wird, die eine eigene Schmierstoffpumpe umfasst. Dieser übergeordnete Aspekt der vorliegenden Erfindung wird durch eine besonders zweckmäßige Lösung hinsichtlich der Energieversorgung der an der Sattelkupplung vorgesehenen Schmierstoffpumpe weiter konkretisiert. Die Schmierstoffpumpe an der Sattelkupplung wird durch diesen weiteren Kerngedanken der vorliegenden Erfindung nämlich durch die Schwenkbewegung der Auflageplatte relativ zum Grundteil bzw. zum Zugfahrzeug angetrieben. Der Antrieb erfolgt durch Wirkübertragungsmittel, welche die Schwenkbewegung aufnehmen.

In einer konkreten Ausgestaltung umfassen die Wirkübertragungsmittel einen Antriebshebel zur Übertragung der Schwenkbewegung und einen Freilauf. Der Freilauf kann insbesondere als Hülsenfreilauf ausgebildet sein. Er hat den Zweck, die vom Antriebshebel ausgeübte Hin- und Herbewegung in eine einseitig gerichtete Drehbewegung zu überführen, so dass die Drehrichtung stets gleich bleibt.

In einer konkreten Ausgestaltung ist der Freilauf auf einer Welle angeordnet derart, dass die Hin- und Herbewegung des Antriebshebels eine Drehbewegung der Welle zum Antrieb der Schmierstoffpumpe bewirkt.

In einer bevorzugten Ausgestaltung umfasst die Schmierstoffpumpe einen in einem Zylinder gelagerten Kolben, wobei der Kolben über einen mit der Welle verbundenen Exzenter angetrieben wird. Über den Exzenter lässt sich ein gewünschter Verlauf des Kolbenhubes einstellen.

In einer konkreten Ausgestaltung der vorliegenden Erfindung sind weiterhin Dosierungsmittel vorgesehen, um eine gewünschte Dosierung bezogen auf die Schwenkbewegungen der Sattelkupplung einstellen zu können. Hierzu kann beispielsweise das Ansaugvolumen des Zylinders pro Kolbenhub eingestellt werden. Selbstverständlich sind aber auch andere Dosierungsmittel möglich, die bei einer bestimmten Abfolge von Schwenkbewegungen der Sattelkupplung die Abgabe einer jeweils gewünschten, vorbestimmten Menge an Schmierstoff an eine Schmierstelle festlegen.

Obwohl prinzipiell in vielen Fällen die Versorgung einer einzigen Schmierstelle, beispielsweise einer zentralen Schmierstelle an der Auflageplatte ausreichend sein kann, ist mit der erfindungsgemäßen Lösung auch die Versorgung mehrerer Schmierstellen an der Sattelkupplung möglich. In einer konkreten Ausgestaltung kann hierfür der Schmierstoffpumpe ein Verteiler, insbesondere ein Progressivverteiler nachgeschaltet sein, um mehrere Schmierstellen mit Schmierstoff zu versorgen. Alternativ ist es natürlich auch denkbar, an einer Sattelkupplung mehrere Schmierstoffpumpen vorzusehen, die jeweils mit zugeordneten Schmierstellen in Fluidverbindung stehen. Die Schmierstoffpumpen können dabei entweder durch einen gemeinsamen Exzenter oder durch jeweils separate Wirkübertragungsmittel durch die Schwenkbewegung der Auflageplatte angetrieben werden.

Schmierstellen können bei der erfindungsgemäßen Schmiereinrichtung insbesondere an der Verriegelung der Sattelkupplung und/oder an der Auflageplatte der Sattelkupplung und/oder an der Schwenkachse zwischen Auflageplatte und Grundteil ausgebildet sein.

Weiterhin wird erfindungsgemäß auch ein Verfahren zur Schmierung einer Sattelkupplung beansprucht, die an einem Zugfahrzeug montiert ist, wobei die Sattelkupplung ein fahrzeugseitiges Grundteil und eine gegenüber dem Grundteil verschwenkbare Auflageplatte aufweist, wobei die Schwenkbewegungen der Auflageplatte relativ zum Grundteil bzw. zum Zugfahrzeug ausgenutzt werden, um die Schmierstoffpumpe anzutreiben.

Auflageplatte und Grundteil sind im Rahmen der Erfindung so zu verstehen, dass zwei durch Relativbewegungen zwischen Zugfahrzeug und Anhänger im angekuppelten Zustand zu Schwenkbewegungen angetriebene Teile der Sattelkupplung gemeint sind, wobei das Grundteil das kinematisch dem Zugfahrzeug näher gelegene und die Auflageplatte das kinematisch dem Anhänger näher gelegene Teil der Sattelkupplung bezeichnen soll. Weiter wird klargestellt, dass bevorzugtermaßen in erster Linie eine Schwenkbewegung zwischen Zugfahrzeug und Anhänger um eine quer zur Fahrtrichtung horizontale Achse ausgenutzt wird; es ist aber auch denkbar, Schwenkbewegungen um die Vertikalachse und/oder andere Schwenkbewegungen zum Antrieb der Schmierstoffpumpe auszunutzen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Ausführungsform der erfindungsgemäßen Sattelkupplung mit Schmiereinrichtung mit perspektivischer Ansicht,
- Fig. 2: die in der Ausführungsform nach Fig. 1 eingesetzte Schmierstoffpumpe in Querschnittsansicht,
- Fig. 3: eine perspektivische Ansicht der Schmierstoffpumpe nach Fig. 2,
- Fig. 4: eine zur Schnittansicht nach Fig. 2 orthogonale Schnittansicht durch die bei der Ausführungsform nach Fig. 1 eingesetzten Schmierstoffpumpe.

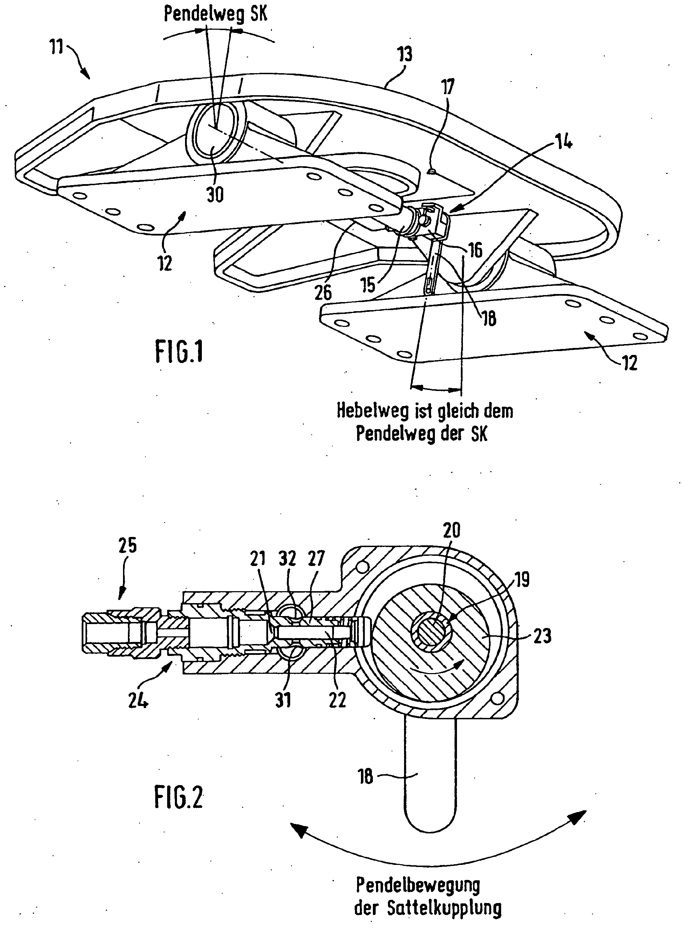

In Fig. 1 ist eine Sattelkupplung 11 mit einer Schmiereinrichtung 14 nach der Erfindung in schematischer Perspektivansicht dargestellt. Die Sattelkupplung 11 umfasst zunächst eine etwa hufeisenförmige Auflageplatte 13, die an ihrer Unterseite gegenüber einem fahrzeugseitigen Grundteil 12 gelenkig gelagert ist. Das fahrzeugseitige Grundteil 12 besteht bei der vorliegenden Ausführungsform aus zwei voneinander getrennten Lagerböcken, die jeweils um einen Lagerbolzen 30 der Auflageplatte 13 verschwenkbar gelagert sind.

Bei am Zugfahrzeug angekuppelten Anhänger gleicht die Schwenkbewegung zwischen Auflageplatte 13 und fahrzeugseitigem Grundteil 12 - hier in Form von zwei separaten Lagerböcken ausgebildet - Bewegungen aus, die bei Überfahren von Kuppen, Mulden, Bodenunebenheiten, etc. entstehen. Diese Schwenkbewegung wird zum Antrieb einer Schmierstoffpumpe 16 eingesetzt, die Bestandteil der bereits erwähnten Schmiereinrichtung 14 ist.

Die Schmiereinrichtung 14 umfasst weiterhin ein in der vorliegenden Ausführungsform an der Schmierstoffpumpe 16 angebrachtes Schmierstoffreservoir 15 sowie mindestens eine Schmierstelle 17, die über eine Schmiermittelleitung 26 mit der Schmierstoffpumpe 16 in Fluidverbindung steht. Die Schmiermittelleitung 26 ist hier über einen pumpenseitigen Anschlussstutzen 25 mit der Schmierstoffpumpe 16 verbunden. Die Schmierstelle 17 ist hier rein schematisch dargestellt und befindet sich an sich auf der dem Grundteil 12 abgewandten Seite der Auflageplatte 13, um die Auflageplatte 13 mit Schmierstoff zu versorgen.

Zur Aufnahme der Schwenkbewegungen zwischen Auflageplatte 13 und (fahrzeugseitigem) Grundteil 12, hier einem der beiden Lagerböcke sind Wirkübertragungsmittel 18, 19, 20, 23 vorgesehen, welche die Schwenkbewegung zwischen Auflageplatte 13 und (fahrzeugseitigem) Grundteil 12 zum Antrieb mindestens eines Kolbens 22 einer Schmierstoffpumpe 16 übersetzen. Konkret umfassen die Wirkübertragungsmittel bei der vorliegenden Ausführungsform, wie aus den Figuren 1 und 2 erkennbar einen an der Schmierstoffpumpe 16, die in der vorliegenden Ausführungsform an der Unterseite der Auflageplatte 13 befestigt ist, ausgehenden Antriebshebel 18, dessen distales Ende am fahrzeugseitigen Grundteil 12 befestigt ist.

Bei der vorliegenden Ausführungsform ist die Anordnung in etwa so getroffen, dass der Pendelweg der Auflageplatte 13 relativ zum (fahrzeugseitigen) Grundteil 12 in etwa dem Hebelweg des Antriebshebels 18 entspricht. Es ist jedoch ohne weiteres ersichtlich, dass je nach Platzierung der Schmierstoffpumpe 16 bzw. der Befestigung bzw. Anlenkung des distalen Antriebshebels des Antriebshebels 18 auch andere Übersetzungsverhältnisse vorgegeben werden können. Ebenfalls ist es ohne weiteres denkbar, die Schmierstoffpumpe 16 an einem gegenüber dem Zugfahrzeug festen Teil, insbesondere dem (fahrzeugseitigen) Grundteil 12 zu befestigen und das distale Ende des Antriebshebels 18 mit einem Teil, das den Schwenkbewegungen der Auflageplatte 13 folgt oder mit der Auflageplatte 13 selbst zu verbinden.

Wie aus Fig. 2 erkennbar, werden die Hin- und Herbewegungen des Antriebshebels 18 auf einen Exzenter 23 der Schmierstoffpumpe 16 übertragen, wobei der Exzenter 23 einen in einem Zylinder 21 gelagerten Kolben 22 der Schmierstoffpumpe antreibt. Um zu verhindern, dass sich der Exzenter 23 mit Hin- und Herbewegung des Antriebshebels 18 ebenfalls hin- und herbewegt, ist auf einer gemeinsamen Welle 20 ein Freilauf 19 vorgesehen, der bewirkt, dass die Hin- und Herbewegung des Antriebshebels 18 in eine nur in einem Drehsinn gerichtet Antriebsbewegung überführt wird. Der Freilauf 19 ist hier als Hülsenfreilauf ausgebildet.

In einer bevorzugten, hier dargestellten Ausführungsform lässt sich die Dosiermenge der Schmierstoffpumpe 16 durch Dosierungseinstellmittel 24 über einen gewissen Bereich einstellen. In der hier konkret dargestellten Ausführungsform umfassen die Dosierungseinstellmittel 24 einen Zylindereinsatz 27, der gegenüber der Welle 20 und dem Exzenter 23 in seiner axialen Lage, beispielsweise durch Verschrauben in einem Gewinde verändert werden kann. Der Zylindereinsatz 27 bildet den für den Pumpvorgang maßgeblichen Zylinder 21, in dem der Kolben 22 gelagert ist, aus. Durch axiale Verlagerung des Zylindereinsatzes 27, die durch ein Herein- oder Herausschrauben des Zylindereinsatzes 27 erreicht werden kann, verändert sich das wirksame Pumpvolumen, da Zylinderöffnungen 31, 32 je nach Lage des Zylindereinsatzes bei einem Hubzyklus früher oder später freigegeben werden und entsprechend früher bzw. später das Zuströmen von Schmiermittel gestatten.

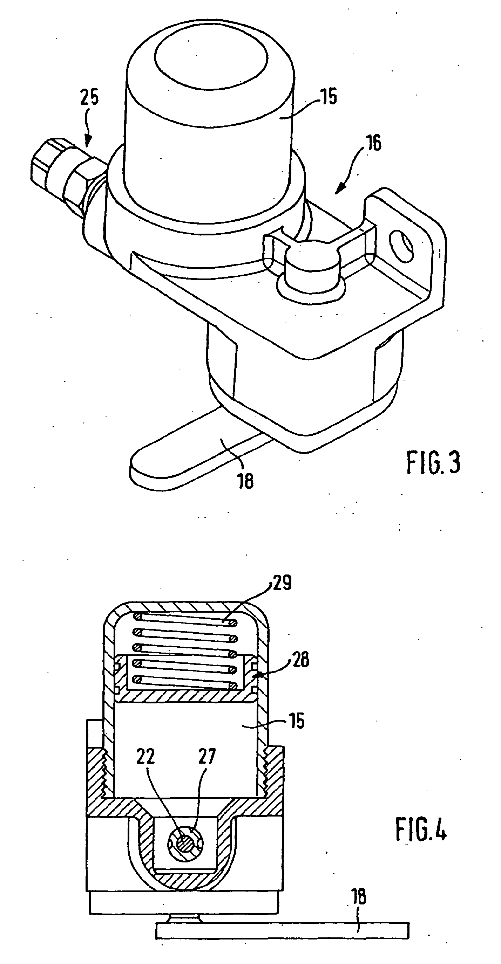

In Fig. 3 ist die Schmierstoffpumpe 16 in perspektivischer Ansicht und in Fig. 4 in einer zur Schnittansicht nach Fig. 2 orthogonalen Ansicht dargestellt. Aus den Figuren 3 und 4 lässt sich erkennen, dass an der Schmierstoffpumpe 16 unmittelbar das Schmierstoffreservoir 15 angeschlossen sein kann. Im Schmierstoffreservoir 15 kann eine bestimmte Menge Schmierstoff, der über einen vorgegebenen Nutzungszeitraum, beispielsweise für ca. 3 Jahre ausreichend ist, aufgenommen sein. Der Schmierstoff wird im Schmierstoffreservoir 15 über einen Schmierstofffolgekolben 28 und eine Spiralfeder 29 mit Druck beaufschlagt, so dass stets ausreichend Schmierstoff an den Zylinderöffnungen 31, 32 des Zylindereinsatzes 27 ansteht.

Die erfindungsgemäße Sattelkupplung bzw. die Schmiereinrichtung zeichnen sich dadurch aus, dass eine äußerst zuverlässige Schmierung auch über einen langen Nutzungszeitraum sichergestellt werden kann, ohne dass ein Anschluss an eine externe Schmierung vorgenommen werden muss. Die Sattelkupplung bleibt damit inkl. der Schmiereinrichtung ein komplett autarkes Bauteil.

### Bezugszeichenliste

- 11: Sattelkupplung
- 12: (fahrzeugseitiges) Grundteil
- 13: Auflageplatte
- 14: Schmiereinrichtung
- 15: Schmierstoffreservoir
- 16: Schmierstoffpumpe
- 17: Schmierstelle
- 18: Wirkübertragungsmittel, Antriebshebel
- 19: Wirkübertragungsmittel, Freilauf
- 20: Wirkübertragungsmittel, Welle
- 21: Zylinder
- 22: Kolben
- 23: Wirkübrtragungsmittel, Exzenter
- 24: Dosierungseinstellmittel
- 25: Anschlussstutzen
- 26: Schmiermittelleitung
- 27: Zylindereinsatz
- 28: Schmierstofffolgekolben
- 29: Spiralfeder
- 30: Lagerbolzen
- 31, 32: Zylinderöffnungen

## Patentansprüche

1. Sattelkupplung zur Montage an einem Zugfahrzeug, um einen Anhänger am Zugfahrzeug anzukuppeln,
- wobei die Sattelkupplung (11) ein fahrzeugseitiges Grundteil (12) und eine gegenüber dem Grundteil (12) verschwenkbare Auflageplatte (13) aufweist,
- wobei die Sattelkupplung (11) weiterhin eine Schmiereinrichtung (14) mit einem Schmierstoffreservoir (15), einer Schmierstoffpumpe (16) und mindestens einer von der Schmierstoffpumpe (16) aus dem Schmierstoffreservoir (15) mit Schmierstoff versorgten Schmierstelle (17) umfasst, und
- wobei die Schmierstoffpumpe (16) durch die Schwenkbewegung der Auflageplatte (13) relativ zum Grundteil (12) bzw. zum Zugfahrzeug aufnehmende Wirkübertragungsmittel (18 bis 20, 23) angetrieben wird.

2. Sattelkupplung nach Anspruch 1,
**dadurch gekennzeichnet,**
**dass** die Wirkübertragungsmittel einen Antriebshebel (18) zur Übertragung der Schwenkbewegung und einen Freilauf (19) umfassen.

3. Sattelkupplung nach Anspruch 2,
**dadurch gekennzeichnet,**
**dass** der Freilauf (19) auf einer Welle (20) angeordnet ist derart, dass eine Hin- und Herbewegung des Antriebshebels (18) eine Drehbewegung der Welle (20) zum Antrieb der Schmierstoffpumpe (16) bewirkt.

4. Sattelkupplung nach einem der Ansprüche 1 bis 3,
**dadurch gekennzeichnet,**
**dass** die Schmierstoffpumpe (16) einen in einem Zylinder (21) gelagerten Kolben (22) umfasst und dass der Kolben (22) über einen mit der Welle (20) verbundenen Exzenter (23) angetrieben wird.

5. Sattelkupplung nach Anspruch 4,
**dadurch gekennzeichnet,**
**dass** Dosierungsmittel (24) an der Schmierstoffpumpe (16) vorgesehen sind, um ein gewünschtes Ansaugvolumen des Zylinders (21) pro Kolbenhub einstellen zu können

6. Sattelkupplung nach einem der Ansprüche 1 bis 5,
**dadurch gekennzeichnet,**
**dass** der Schmierstoffpumpe (16) ein Verteiler, insbesondere ein Progressivverteiler nachgeschaltet ist, um mehrere Schmierstellen (17) mit Schmierstoff zu versorgen.

7. Sattelkupplung nach einem der Ansprüche 1 bis 6,
**dadurch gekennzeichnet,**
**dass** die mit der Schmierstoffpumpe (16) in Fluidverbindung stehenden Schmierstellen (17) an der Verriegelung der Sattelkupplung (11) und/oder an der Auflageplatte (13) und/oder an der Schwenkachse zwischen Auflageplatte (13) und Grundteil (12) ausgebildet sind.

8. Verfahren zur Schmierung einer Sattelkupplung (11), die an einem Zugfahrzeug montiert ist, wobei die Sattelkupplung (11) ein fahrzeugseitiges Grundteil (12) und eine gegenüber dem Grundteil (12) verschwenkbare Auflageplatte (13) aufweist,
**dadurch gekennzeichnet,**
**dass** die Schwenkbewegungen der Auflageplatte (13) relativ zum Grundteil (12) bzw. zum Zugfahrzeug ausgenutzt werden, um eine Schmierstoffpumpe (16) anzutreiben.

## Claims

1. Fifth wheel for mounting on a pulling vehicle in order to couple a trailer to the pulling vehicle,
- wherein the fifth wheel (11) has a vehicle-side base part (12) and a support plate (13) which can be pivoted with respect to the base part (12),
- wherein the fifth wheel (11) also comprises a lubricating device (14) with a lubricant reservoir (15), a lubricant pump (16) and at least one lubricating point (17) supplied with lubricant from the lubricant reservoir (15) by the lubricant pump (16), and
- wherein the lubricant pump (16) is driven by operation transmission means (18 to 20, 23) which pick up the pivoting movement of the support plate (13) relative to the base part (12) or to the pulling vehicle.

2. Fifth wheel according to claim 1, **characterised in that** the operation transmission means comprise a drive lever (18) to transfer the pivoting movement and a free-wheel (19).

3. Fifth wheel according to claim 2, **characterised in that** the free-wheel (19) is arranged on a shaft (20) such that a forward and backward movement of the drive lever (18) effects a rotary movement of the shaft (20) to drive the lubricant pump (16).

4. Fifth wheel according to one of claims 1 to 3, **characterised in that** the lubricant pump (16) comprises a piston (22) mounted in a cylinder (21) and **in that** the piston (22) is driven via a cam (23) connected to the shaft (20).

5. Fifth wheel according to claim 4, **characterised in that** metering means (24) are provided on the lubricant pump (16) in order to be able to set a required intake volume of the cylinder (21) per piston stroke.

6. Fifth wheel according to one of claims 1 to 5, **characterised in that** a distributor, in particular a progressive distributor, is connected downstream of the lubricant pump (16) in order to supply several lubricating points (17) with lubricant

7. Fifth wheel according to one of claims 1 to 6, **characterised in that** the lubricating points (17) in fluid connection with the lubricant pump(16) are formed on the lock of the fifth wheel (11) and/or on the support plate (13) and/or on the pivoting axle between support plate (13) and base part (12).

8. Process for lubricating a fifth wheel (11) which is mounted on a pulling vehicle, wherein the fifth wheel (11) has a vehicle-side base part (12) and a support plate (13) which can be pivoted with respect to the base part (12), **characterised in that** the pivoting movements of the support plate (13) relative to the base part (12) or to the pulling vehicle are utilised in order to drive a lubricant pump (16).

## Revendications

1. Sellette d'attelage pour montage sur un véhicule tracteur pour coupler une remorque sur un véhicule tracteur,
- la sellette d'attelage (11) présentant une partie de base (12) côté véhicule tracteur et face à la partie de base (12) une plaque d'appui (13) oscillante,
- la sellette d'attelage (11) comportant par ailleurs, un dispositif de lubrification (14) avec un réservoir de lubrifiant (15), une pompe à lubrifiant (16) et au moins un point de graissage (17) alimenté en lubrifiant à partir du réservoir de lubrifiant (15) par la pompe à lubrifiant (16), et
- la pompe à lubrifiant (16) étant actionnée par les moyens de transmission actifs (18 à 20, 23) captant le mouvement d'oscillation de la plaque d'appui (13) par rapport à la partie de base (12) ou au véhicule tracteur.

2. Sellette d'attelage selon la revendication 1,
**caractérisée en ce que**
les moyens de transmission actifs comprennent un levier de commande (18) pour la transmission du mouvement d'oscillation et une roue libre (19).

3. Sellette d'attelage selon la revendication 2,
**caractérisée en ce que**
la roue libre (19) est disposée sur un arbre (20) de sorte que le mouvement de va-et-vient d'un levier de commande (18) provoque un mouvement de rotation de l'arbre (20) pour commander la pompe à lubrifiant (16).

4. Sellette d'attelage selon l'une quelconque des revendications 1 à 3,
**caractérisée en ce que**
la pompe à lubrifiant (16) comporte un piston (22) logé dans un vérin (21) et **en ce que** le piston (22) est actionné par un excentrique (23) relié à l'arbre (20).

5. Sellette d'attelage selon la revendication 4,
**caractérisée en ce que**
des moyens de dosage (24) sont prévus sur la pompe à lubrifiant (16) afin de pouvoir régler le volume souhaité d'aspiration du vérin (21) par course de piston.

6. Sellette d'attelage selon l'une quelconque des revendications 1 à 5,
**caractérisée en ce qu'**un
répartiteur est raccordé en aval de la pompe à lubrifiant (16), en particulier un répartiteur progressif, pour alimenter plusieurs points de graissage (17) en lubrifiant.

7. Sellette d'attelage selon l'une quelconque des revendications 1 à 6,
**caractérisée en ce que**
les points de graissage (17), reliés au fluide au moyen de la pompe à lubrifiant (16), sont formés sur le verrouillage de la sellette d'attelage (11) et/u sur la plaque d'appui (13) et/ou sur l'axe d'oscillation entre la plaque d'appui (13) et la partie de base (12).

8. Dispositif de lubrification d'une sellette d'attelage (11) monté sur un véhicule tracteur, la sellette d'attelage (11) présentant une partie de base (12) côté véhicule tracteur et une plaque d'appui (13) oscillante par rapport à la partie de base (12)
**caractérisé en ce que**
les mouvements d'oscillation de la plaque d'appui (13) par rapport à la partie de base (12) ou au véhicule tracteur sont utilisés pour actionner une pompe à lubrifiant (16).
